# EUROPEAN PATENT APPLICATION

(11) **EP 2 728 860 A2**
(43) Date of publication of application: **07.05.2014**
(21) Application number: 13397534.2
(22) Date of filing: 28.10.2013
(51) Int. Cl.: H04N 7/18

(54) **Integration of video surveillance systems**

(30) Priority: 30.10.2012 US 201213664110
(71) Applicant: Teleste Oyj, 20660 Littoinen (FI)
(72) Inventor: Marjoniemi, Sami, 20400 Turku (FI)
(74) Representative: Tampereen Patenttitoimisto Oy

(57) **Abstract**

A system for administration of a remote node in a video surveillance system, said remote node being arranged to provide video surveillance data to the video surveillance system using different communication protocol than the video surveillance system, the video surveillance system comprising a client application executed by a node point of the video surveillance system, the client application comprising a remote desktop application for remotely controlling said remote node according to a native protocol of said remote node, and said remote node comprising a remote desktop application for receiving control signals from said client application, the remote node further comprising an encoding application arranged, according to said control signals, to capture and encode a display view of video surveillance data of said remote node and to stream the encoded display view to said client application.

## Description

### Field of the invention

The invention relates to video surveillance systems, specifically to integration of video surveillance systems using different protocols.

### Background of the invention

Large video surveillance systems are typically implemented as IP-based systems, where video management, decoding and recording solutions are provided by one supplier. In large video surveillance systems, there is a need for integrating other security applications to work together with the video surveillance system as well as to support IP-cameras and video recording components from other suppliers. Thus, the video surveillance system may comprise sub-systems and/or single components from other vendors, which must be integrated with the system control of the video surveillance system. The sub-systems and/or single components from other vendors in many cases use different communication and/or video coding protocols, which may be non-compatible with the protocols of control system of the video surveillance system. The video surveillance system may further comprise applications providing additional surveillance data, such as maps, fire alarm systems, access control systems, etc. Similarly, the original data format of these applications may be non-compatible with the video surveillance system.

However, there is no general-purpose procedure for integrating video surveillance systems with non-compatible protocols or acquiring data from non-compatible surveillance data applications, and therefore integrating sub-systems and/or single components from different vendors must be performed manually as sub-system-specific or component-specific integration, which is very laborious and time consuming. For this reason, the integration has been omitted in many cases, which means that the operator must monitor, control and administrate two or more video surveillance systems simultaneously and use multiple applications, computers, and/or displays to acquire additional surveillance data such as maps, fire alarm systems, access control systems, etc. from the other systems.

### Brief summary of the invention

Now, an improved arrangement has been developed to reduce the above-mentioned problems. As different aspects of the invention, we present a video surveillance system and a node point of a video surveillance system, which are characterized in what will be presented in the independent claims.

The dependent claims disclose advantageous embodiments of the invention.

The invention is based on the idea that rather than performing the integration as sub-system-specific or component-specific integration, the integration is performed on operating system level, such that at least the control of the sub-systems and/or single components from different vendors and visualization of the video surveillance data provided by the sub-systems and/or single components from different vendors is achieved.

In other words, a first aspect of the invention describes a system for administration of a remote node in a video surveillance system, said remote node being arranged to provide surveillance data to the video surveillance system using different communication protocol than the video surveillance system, the video surveillance system comprising a client application executed by a node point of the video surveillance system, the client application comprising a remote desktop application for remotely controlling said remote node according to a native protocol of said remote node, and said remote node comprising a remote desktop application for receiving control signals from said client application, the remote node further comprising an encoding application arranged, according to said control signals, to capture and encode a display view of surveillance data of said remote node and to stream the encoded display view to said client application.

According to an embodiment, the client application comprises a decoder for decoding the encoded display view, the client application being further arranged to display the decoded display view of the surveillance data.

According to an embodiment, the surveillance data comprises video surveillance data from another video surveillance system and/or additional surveillance data from a respective application.

According to an embodiment, the additional surveillance data comprises surveillance data from at least one of the following: alarm maps, fire alarm systems, access control systems, traffic surveillance system, or radar systems.

According to an embodiment, the client application comprises a user interface icon for activating the remote desktop application in response to a single user interface command to send said control signal to the remote desktop application of the remote node for starting said capturing and encoding the display view of surveillance data of said remote node.

According to an embodiment, the user interface icon is linked to contact information of the remote node, such as an IP address of the remote node, access information and address information of video stream.

According to an embodiment, the video surveillance system comprises a storage arranged to store the encoded display view.

A second aspect of the invention includes a node point of a video surveillance system, the node point being arranged to obtain surveillance data from a remote node in a video surveillance system, said remote node using different communication protocol than the video surveillance system, the node point comprising a client application, the client application comprising a remote desktop application for remotely controlling said remote node according to a native protocol of said remote node, control means for sending control signals to the remote node to capture and encode a display view of surveillance data of said remote node and to stream the encoded display view to said client application, and a decoder for decoding the encoded display view, the client application being further arranged to display the decoded display view of the surveillance data.

According to an embodiment, the client application comprises a user interface icon for activating the remote desktop application in response to a single user interface command to send said control signal to the remote desktop application of the remote node for starting said capturing and encoding the display view of surveillance data of said remote node.

According to an embodiment, the user interface icon is linked to contact information of the remote node, such as an IP address of the remote node, access information and address information of video stream.

By means of the system according to the invention and its various embodiments it is possible to attain significant advantages. The integration is performed on operating system level rather than as sub-system-specific or component-specific integration, which can be implemented significantly easier and faster than in prior known solutions. Furthermore, only one decoder application is needed to decode and display the surveillance data gathered by the various remote nodes. The surveillance data gathered by the remote node can be easily linked to other views of the video surveillance system. This is especially useful in contemporary video surveillance systems, where various types of surveillance data from different kind of application should be linked to be shown together. Moreover, the operations of the remote control and the integration may be made invisible to the user of the client application, thus making the remote control intuitive for the user.

### Brief description of the drawings

The invention will now be described in more detail in connection with preferred embodiments with reference to the appended drawings, in which:
- Fig. 1: shows in a reduced block chart an example of an integrated video surveillance system, where the communication procedure according to the invention can be applied; and
- Fig. 2: shows in a reduced block chart an example of a node point of an integrated video surveillance system according to an embodiment.

### Detailed description of the invention

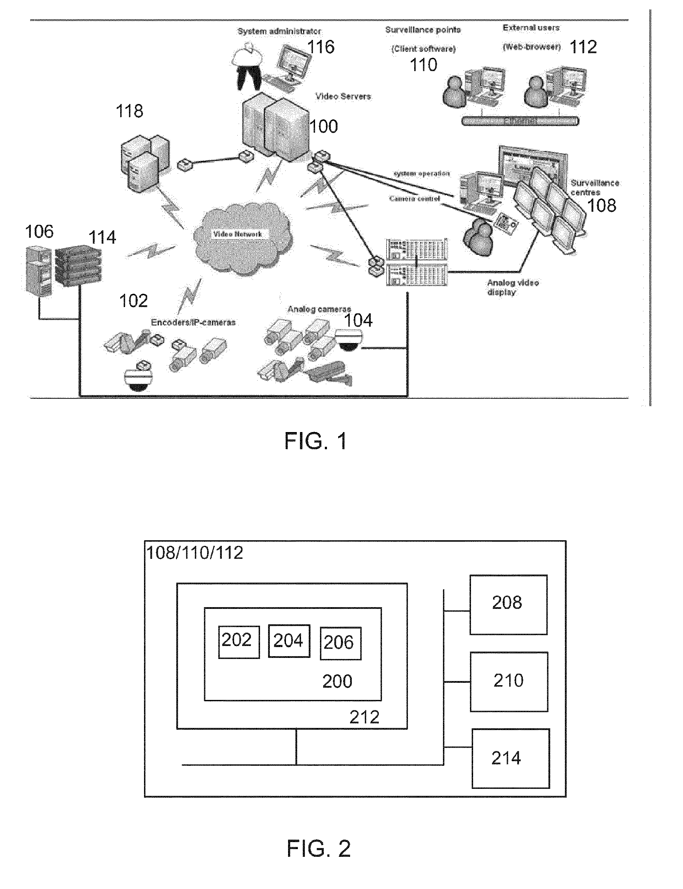

Figure 1 shows by a reduced block chart an example of a CCTV surveillance system, where the communication procedure according to the invention may advantageously be applied. The purpose of Figure 1 is to illustrate the operation of a CCTV surveillance system on a general level, and therefore Figure 1 does not show all the functional blocks that are adaptable to a CCTV surveillance system.

A typical video surveillance system, as illustrated in Figure 1, comprises one or more video servers 100, a plurality of surveillance cameras 102, 104, a network recorder 106 for recording video streams from the cameras, and client applications 108, 110, 112 for monitoring the video streams from the surveillance cameras and for controlling the system.

The one or more video servers 100 provide the central control to the video surveillance system. At least one server is responsible for system management, handling of system status updates, and arbitration of resources and system users. It maintains the system configuration database and may provide functionality required to control switching of video, audio and data streams between sources, such as the surveillance cameras, and stream destination devices, such as recorders, displays and monitor walls. In case of a plurality of servers, each server component is preferably designed to operate in multi-server environments according to the hierarchy defined in the system configuration.

The surveillance cameras may be digital video encoders or IP cameras 102 capable of sending and receiving data via the network and the Internet. Video encoders may lack a built-in recording capability and they may therefore require a central Network Video Recorder (NVR) 106 to handle the recording, video and alarm management. Some IP cameras, in turn, do not require the NVR, since they are capable of recording directly to digital storage media, such as flash drives, hard disk drives or network attached storage. In addition to or instead of the digital cameras, also traditional analog cameras 104 may be utilized in the video surveillance system via using Digital Video Recorders or digital video encoders.

The NVR 106 is responsible for recording audio and video streams from the system. It may be arranged to record video and/or audio in an uninterruptible loop mode to a local hard drive and ensure that all critical events are recorded, preferably before the system operator is able to react on them. The NVR may support multiple simultaneous client connections and multiple points of viewing of recorded material. It may also be arranged to carry out camera control and touring and it may provide media encryption and watermarking.

The client application is the user interface providing an interactive gateway to system control and local decoding station for displaying surveillance video and data to the operator. The system control may be accessible from various node points. Typically a video surveillance system comprises one or more surveillance centers 108, usually provided with a plurality of displays or a video wall with a possibility to display several screens on a large wall display or on one monitor. The system control may also be accessible from a plurality of remote surveillance points 110 comprising the client application, the surveillance points being connected to a node point of the video surveillance network. It is possible to provide access to the control system also from an external node 112, for example via a Web-based client application providing the operator an interface to control system devices, components and resources from a standard web browser.

The client application typically provides an access to recording and alarm handling as well as live video viewing and handling. It may allow the operator to control the video system using, for example, keyboard, mouse or joystick and to choose between several graphical user interfaces. It may also provide additional functions, such as alarm and control notifications via e-mail or SMS or a post-processing tool to manage recorded material.

A video surveillance system typically comprises an external storage component 114, possibly arranged in connection with the NVR 106, for additional and/or long-time storing of the recorded audio and video material.

The configuration of the video surveillance system is administrated by a system administrator 116 having a configuration interface for storing system configuration data, such as setup data for each system element and system module in a database. It may also allow the system administrator to configure the details of user profiles, setup rights and priorities to system resources.

Typically, most components of a video surveillance system are provided by one vendor, whereby ensuring the compatibility of the components is easier. Nevertheless, the video surveillance system may comprise sub-systems and/or single components 118 from other vendors, which must be integrated with the system control of the video surveillance system. Therefore, the server 100 may comprise control interfaces for devices using non-compatible, e.g. vendor-specific, protocols.

The video surveillance system may further comprise applications providing additional surveillance data, which may be utilized in enhancing the field of surveillance beyond the mere video surveillance. The applications may be provided by a remote node 118. The additional surveillance data may comprise, for example, alarm maps, fire alarm systems, access control systems, traffic surveillance system, and radar systems. In many cases, the original data format of these applications is non-compatible with the video surveillance system.

However, integrating sub-systems and/or single components from different vendors must be performed manually as sub-system-specific or component-specific integration, which is very laborious and time consuming. The same applies with additional surveillance data applications, which are non-compatible with the video surveillance system. Therefore, the integration has been omitted in many cases, which means that the operator must monitor, control and administrate two or more video surveillance systems and/or additional surveillance data applications simultaneously.

In order to alleviate the above integration problems, an improved procedure for integrating sub-systems and/or single components from different vendors is provided.

In the system, a remote node 118 of a video surveillance system is arranged to provide surveillance data to the video surveillance system, said remote node 118 being a sub-system and/or single component using a surveillance application with a different communication protocol than what is used for controlling the remaining video surveillance system. The client application executed by a node point 108, 110, 112 of the video surveillance system comprises a remote desktop application for remotely controlling the remote node according to a native protocol of the surveillance application of the remote node 118. For receiving control signals from the client application, the remote node also comprises a remote desktop application such that the client application can take a remote control of the surveillance application of remote node 118 using the native protocol of the remote node 118. The remote node 118 further comprises an encoding application arranged, according to said control signals, to capture and encode a display view of surveillance data of said remote node 118 and to stream the encoded display view to said client application. Thus, the control node points 108, 110, 112 are provided with encoded video stream of video surveillance data shown on the display of the remote node.

The node point 108, 110, 112 of the video surveillance system, comprising the client application is schematically depicted in the block chart of Figure 2, wherein the client application 200 comprises a remote desktop application 202 for remotely controlling said remote node according to a native protocol of said remote node. The client application 200 further comprises control means 204 for sending control signals to the remote node to capture and encode a display view of surveillance data of said remote node and to stream the encoded display view to said client application. The client application 200 may further comprise a decoder 206 for decoding the encoded display view, and the decoded display view of the surveillance data may then be displayed on a display 208 of the node point. for carrying out the above operations, the node point 108, 110, 112 naturally comprises one or more processors 210 for executing the applications, one or more memory units 212 for storing the application programs and the data processed by them and communication unit 214, comprising for example a transmitter and/or receiver for transmitting the control signals and for receiving stream of encoded display view.

It should be noted that the surveillance data may comprise video surveillance data from another video surveillance system and/or additional surveillance data from a respective application.

The client application further comprises a decoder for decoding the encoded display view, and the client application is then arranged to display the decoded display view of the surveillance data on one of said plurality of displays or on a video wall. Thus, the client application is provided with both the control of the remote node and the ability to display the surveillance data gathered by the remote node, thus providing the integration of both the control and visualization of the sub-systems and/or single components from different vendors and additional surveillance data applications. In other words, the integration is performed on operating system level rather than as sub-system-specific or component-specific integration, which can be implemented significantly easier and faster than in prior known solutions. Furthermore, only one decoder application is needed to decode and display the surveillance data gathered by the various remote nodes.

With the arrangement described above, it is possible link the surveillance data gathered by the remote node to other views of the video surveillance system. For example, in a large traffic surveillance system the video surveillance data gathered by the remote node can be easily shown together with map information of the area wherefrom the video surveillance data is gathered, wherein the map information may be provided by an application from another remote node. As another example, surveillance data from a fire alarm system may be shown together with map information of a scene of fire together with live video data on action at the scene of fire. Herein, each of the different data may be obtained from different remote nodes.

The client application may comprise a user interface icon for activating the remote desktop application, such as "Connect to the remote node", and when a user of the client application activates this icon, the control signals are sent to the remote desktop application of the remote node for starting the capturing and encoding the display view of surveillance data of said remote node.

The user interface icon may be linked to contact information of the remote node, such as an IP address of the remote node, access control information of the remote node and address information of the video stream. Thus, the user interface icon comprises all necessary information for taking the remote control of the remote node 118 such that the operations of the remote control and the integration are invisible to the user of the client application, thus making the remote control intuitive for the user.

In addition to or instead of displaying the encoded display view on one of said plurality of displays or on the video wall, the encoded display view may be stored in the NVR 106 or in the external storage component 114.

It will be obvious for a person skilled in the art that with technological developments, the basic idea of the invention can be implemented in a variety of ways. Thus, the invention and its embodiments are not limited to the above-described examples but they may vary within the scope of the claims.

## Claims

1. A system for administration of a remote node in a video surveillance system, said remote node being arranged to provide surveillance data to the video surveillance system using different communication protocol than the video surveillance system, comprising:
the video surveillance system comprising a client application executed by a node point of the video surveillance system, the client application comprising a remote desktop application for remotely controlling said remote node according to a native protocol of said remote node, and
said remote node comprising a remote desktop application for receiving control signals from said client application, the remote node further comprising an encoding application arranged, according to said control signals, to capture and encode a display view of surveillance data of said remote node and to stream the encoded display view to said client application.

2. The system according to claim 1, wherein
the client application comprises a decoder for decoding the encoded display view, the client application being further arranged to display the decoded display view of the surveillance data.

3. The system according to claim 1 or 2, wherein
the surveillance data comprises video surveillance data from another video surveillance system and/or additional surveillance data from a respective application.

4. The system according to claim 3, wherein
the additional surveillance data comprises surveillance data from at least one of the following: alarm maps, fire alarm systems, access control systems, traffic surveillance system, or radar systems.

5. The system according to any preceding claim, wherein
the client application comprises a user interface icon for activating the remote desktop application in response to a single user interface command to send said control signal to the remote desktop application of the remote node for starting said capturing and encoding the display view of video surveillance data of said remote node.

6. The system according to claim 5, wherein
the user interface icon is linked to contact information of the remote node, such as an IP address of the remote node, access information and address information of video stream.

7. The system according to any preceding claim, wherein
the video surveillance system comprises a storage arranged to store the encoded display view.

8. A node point of a video surveillance system, the node point being arranged to obtain surveillance data from a remote node in a video surveillance system, said remote node using different communication protocol than the video surveillance system,
the node point comprising a client application, the client application comprising
a remote desktop application for remotely controlling said remote node according to a native protocol of said remote node,
control means for sending control signals to the remote node to capture and encode a display view of surveillance data of said remote node and to stream the encoded display view to said client application, and
a decoder for decoding the encoded display view, the client application being further arranged to display the decoded display view of the surveillance data.

9. The node point according to claim 8, wherein
the surveillance data comprises video surveillance data from another video surveillance system and/or additional surveillance data from a respective application.

10. The node point according to claim 9, wherein
the additional surveillance data comprises surveillance data from at least one of the following: alarm maps, fire alarm systems, access control systems, traffic surveillance system, or radar systems.

11. The node point according to any of claims 8 - 10, wherein
the client application comprises a user interface icon for activating the remote desktop application in response to a single user interface command to send said control signal to the remote desktop application of the remote node for starting said capturing and encoding the display view of surveillance data of said remote node.

12. The node point according to claim 11, wherein
the user interface icon is linked to contact information of the remote node, such as an IP address of the remote node, access information and address information of video stream.
